(19)

Europäisches
Patentamt
European
Patent Office
Office européen
des brevets

(11)  **EP 4 114 098 A1**

(12)  **EUROPEAN PATENT APPLICATION**
published in accordance with Art. 153(4) EPC

(43) Date of publication:
**04.01.2023 Bulletin 2023/01**

(21) Application number: **20921280.2**

(22) Date of filing: **28.12.2020**

(51) International Patent Classification (IPC):
*H04W 56/00* (2009.01)

(52) Cooperative Patent Classification (CPC):
**H04W 56/00**

(86) International application number:
**PCT/CN2020/139938**

(87) International publication number:
**WO 2021/169547 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.02.2020  CN 202010123199**

(71) Applicant: **ZTE Corporation
Shenzhen, Guangdong 518057 (CN)**

(72) Inventors:
• **CUI, Xiaoguang
Shenzhen, Guangdong 518057 (CN)**
• **YANG, Feng
Shenzhen, Guangdong 518057 (CN)**
• **WEI, Yanzeng
Shenzhen, Guangdong 518057 (CN)**

(74) Representative: **Novagraaf Technologies
Bâtiment O2
2, rue Sarah Bernhardt
CS90017
92665 Asnières-sur-Seine Cedex (FR)**

(54)  **SYNCHRONIZATION SIGNAL SENDING METHOD, AND ELECTRONIC DEVICE AND STORAGE MEDIUM**

(57)  The embodiments of the present invention relate to the technical field of communications, and disclosed is a synchronization signal sending method, an electronic device, and a storage medium. In the present invention, the method comprises: grouping radio frames to be sent, so as to obtain a plurality of radio frame groups; and sending each radio frame group via a first antenna port and a second antenna port, wherein a synchronization signal in at least one radio frame in each radio frame group is sent only via the first antenna port or the second antenna port. By sending radio frames in groups at a first antenna port and a second antenna port, and sending a synchronization signal in at least one radio frame only via the first antenna port or the second antenna port, the autocorrelation of synchronization signals received by a terminal is prevented from being reduced in cases where the terminal is unaware, thereby reducing the possibility of signal demodulation failure of the terminal.

Fig. 1

**EP 4 114 098 A1**

## Description

## Technical Field

The embodiments of the present invention relate to the technical field of communications, and in particular, to a synchronization signal sending method, an electronic device, and a storage medium.

## Background

At present, in an application scenario of narrowband Internet of Things technology, when a narrowband Internet of Things device accesses a network, primary and secondary synchronization information of a cell needs to be searched first, and a cell system message can be demodulated only after synchronization of a terminal and a base station in time and frequency domains is completed, thereby completing cell access. Therefore, demodulating primary and secondary synchronization is a key step for a terminal to access a cell. In the 3rd generation partnership project (3GPP), a downlink channel of a narrowband Internet of Things (NB-IOT) is required to support two antenna ports, but due to cost reasons and power consumption requirements, most of terminals support single-antenna reception.

The inventor of the present invention finds that: as a primary synchronization signal NPSS and a secondary synchronization signal NSSS at a base station side are different from other physical layer signal designs, a terminal does not know antenna port information at the base station side when demodulating the narrowband primary synchronization signal NPSS and the narrowband secondary synchronization signal NSSS, and therefore the narrowband primary synchronization signal NPSS and the narrowband secondary synchronization signal NSSS sent by two antennas at the base station side are signals having completely the same time and frequency domains; after passing through a spatial radio channel, the synchronization signals sent by the two antennas at the base station are superposed at the terminal antenna; at the terminal antenna, when two signals have opposite phases, signal strength of the signals after being superposed decreases sharply, and a signal-to-noise ratio of the NPSS/NSSS becomes lower. As the sequence length of the NPSS and the NSSS is short, in a low signal-to-noise ratio scenario, the autocorrelation of NPSS and NSSS sequences will be reduced significantly, causing severe impact on the success rate of the terminal demodulating the NPSS and NSSS sequences.

## Summary

The objective of the embodiments of the present invention is to provide a synchronization signal sending method, an electronic device, and a storage medium, so that the autocorrelation of synchronization signals received by a terminal is prevented from being reduced in cases where the terminal is unaware, thereby reducing the possibility of signal demodulation failure of the terminal.

In order to solve the described technical problem, the embodiments of the present invention provide a synchronization signal sending method, comprising: grouping radio frames to be sent, so as to obtain a plurality of radio frame groups; and sending each radio frame group via a first antenna port and a second antenna port, wherein a synchronization signal in at least one radio frame in each radio frame group is sent only via the first antenna port or the second antenna port.

The embodiments of the present invention further provide an electronic device, comprising: at least one processor; and a memory in communication connection with the at least one processor, wherein the memory stores an instruction executable by the at least one processor, and the instruction is executed by the at least one processor, so that the at least one processor can execute the synchronization signal sending method.

The embodiments of the present invention further provide a computer-readable storage medium, storing a computer program which, when executed by a processor, implements the synchronization signal sending method.

In addition, sending each radio frame group via a first antenna port and a second antenna port comprises: determining a first synchronization signal sending timing relationship of the radio frame group at the first antenna port and a second synchronization signal sending timing relationship of the radio frame group at the second antenna port, wherein the first synchronization signal sending timing relationship is used for indicating whether the synchronization signal in each radio frame in the radio frame group is sent via the first antenna port, and the second synchronization signal sending timing relationship is used for indicating whether the synchronization signal in each radio frame in the radio frame group is sent via the second antenna port; and according to the first synchronization signal sending timing relationship and the second synchronization signal sending timing relationship, sending the synchronization signal in each radio frame in the radio frame group via the first antenna port and the second antenna port.

In addition, the synchronization signal sending timing relationship in the radio frame is acquired by: according to the number of frames of the radio frame group, generating a first timing bitmap for the first antenna port to send the synchronization signal in each radio frame in the radio frame group, and according to the number of frames of the radio frame group, generating a second timing bitmap for the second antenna port to send the synchronization signal in each radio frame in the radio frame group; and according to the first timing bitmap, determining a synchronization signal sending timing relationship in the radio frame of the radio frame group at the first antenna port, and according to the second timing bitmap, determining a synchronization signal sending timing relationship in the radio frame of the radio frame group at the second antenna port. An NPSS/NSSS synchronization signal sending timing relationship in a radio frame is designed in a timing bitmap, and two antenna ports send the synchronization signals in the radio frames according to indication of the timing bitmap.

In addition, before sending each radio frame group via a first antenna port and a second antenna port, the method further comprises: acquiring a power margin of the first antenna port and a power margin of the second antenna port, wherein,

the power margin of the first antenna port is the difference between a maximum power capability and a configured power of the first antenna port, and the power margin of the second antenna port is the difference between a maximum power capability and a configured power of the second antenna port; and determining, according to the power margin of the first antenna port, whether to perform power compensation on the synchronization signal in the radio frame sent by the first antenna port, and determining, according to the power margin of the second antenna port, whether to perform power compensation on the synchronization signal in the radio frame sent by the second antenna port.

In addition, determining, according to the power margin of the first antenna port, whether to perform power compensation on the synchronization signal in the radio frame sent by the first antenna port comprises: if the power margin of the first antenna port is greater than or equal to a preset threshold, determining to perform power compensation on the synchronization signal in the radio frame sent by the first antenna port; and determining, according to the power margin of the second antenna port, whether to perform power compensation on the synchronization signal in the radio frame sent by the second antenna port comprises: if the power margin of the second antenna port is greater than or equal to the preset threshold, determining to perform power compensation on the synchronization signal in the radio frame sent by the second antenna port. By performing power compensation on a synchronization signal in a sent radio frame when the current configured power of an antenna port is insufficient, the strength of a signal received by a terminal is ensured, the signal-to-noise ratio of the signal received by the terminal is prevented from being reduced, and the stability of the terminal for demodulating the synchronization signal is improved.

In addition, performing power compensation on the synchronization signal in the radio frame sent by the first antenna port comprises: according to the timing bitmap of the first antenna port, generating a power compensation bitmap of the first antenna port, and according to the power compensation bitmap of the first antenna port, performing power compensation on the synchronization signal in the radio frame sent by the first antenna port; and performing power compensation on the synchronization signal in the radio frame sent by the second antenna port comprises: according to the timing bitmap of the second antenna port, generating a power compensation bitmap of the second antenna port, and according to the power compensation bitmap of the second antenna port, performing power compensation on the synchronization signal in the radio frame sent by the second antenna port. The power compensation bitmap is used to control a power compensation operation for the synchronization signal in the radio frame sent by the antenna port.

## Brief Description of the Drawings

One or more embodiments are exemplified by corresponding figures in the drawings, which do not constitute limitations to the embodiments.

Fig. 1 is a flowchart of a synchronization signal sending method according to a first embodiment of the present invention;

Fig. 2 is a schematic structural diagram of a synchronization signal sending apparatus according to a first embodiment of the present invention;

Fig. 3 is a schematic diagram of sending timing relationships of synchronization signals in radio frames at a first antenna port and a second antenna port according to a first embodiment of the present invention;

Fig. 4 is a flowchart of a synchronization signal sending method according to a second embodiment of the present invention;

Fig. 5 is a schematic structural diagram of a synchronization signal sending apparatus according to a second embodiment of the present invention;

Fig. 6 is a flowchart of a synchronization signal sending method according to a third embodiment of the present invention;

Fig. 7 is a schematic diagram of sending timing relationships and power compensation relationships of synchronization signals in radio frames at a first antenna port and a second antenna port according to a third embodiment of the present invention; and

Fig. 8 is a schematic structural diagram of an electronic device according to a fourth embodiment of the present invention.

## Detailed Description of the Embodiments

To make the objectives, technical solutions, and advantages of the embodiments of the present invention clearer, the following describes the embodiments of the present invention in detail with reference to the drawings. A person of ordinary skill in the art may understand that, in the embodiments of the present invention, various technical details are provided to enable readers to better understand the present invention. However, even without these technical details and various changes and modifications based on the following embodiments, the technical solutions of the present invention can also be implemented. The division of the following embodiments is for convenience of description, and shall not constitute any limitation to specific implementations of the present invention. The embodiments may be referred to in combination with each other without any contradiction.

A first embodiment of the present invention relates to a synchronization signal sending method. In the present embodiment, radio frames to be sent are grouped, so as to obtain a plurality of radio frame groups; and each radio frame group is sent via a first antenna port and a second antenna port, wherein at least one radio frame in each radio frame group is sent only via the first antenna port or the second antenna port.

The synchronization signal sending method in the present embodiment can be applied to a base station device in a narrowband Internet of Things (NB-IoT). The implementation details of the synchronization signal sending method in the present embodiment are specifically described in the following by taking a scenario in which a base station in an NB-IoT sends primary and secondary synchronization signals as an example. The following content is only implementation details provided for the convenience of understanding, and is not mandatory for implementing the present solution.

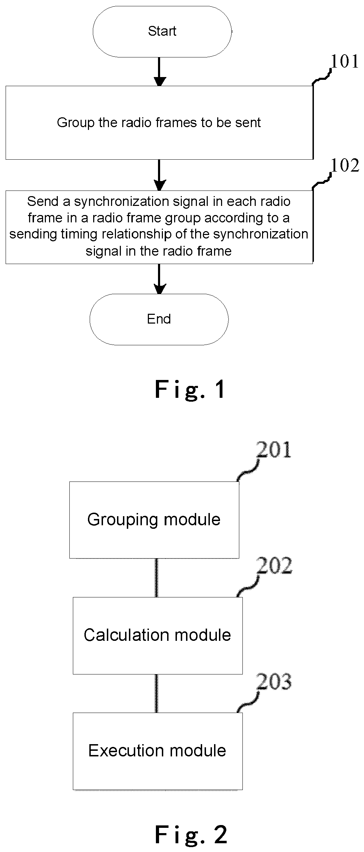

Fig. 1 specifically shows a synchronization signal sending method in the present embodiment, comprising:

Step 101: grouping the radio frames to be sent.

In an embodiment, in a protocol for network signal transmission, the total number of radio frames included in one period is 1024, that is, 2 to the power of 10. In order to ensure that the number of radio frame groups obtained after all the radio frames within one period are grouped is an integral value, the radio frames are generally grouped on the basis of a preset number of frames, wherein the value of the preset number of frames is 2 to the power of N, and N is a natural number greater than or equal to 3. According to different adjustment granularities, N may have different values. As the time required for sending each radio frame is the same, taking N as a smaller value can reduce the period time for sending a radio frame group.

In an example, it is assumed that radio frames are grouped into several radio frame groups, each radio frame group has a radio frame group identifier, and the number of radio frames included in each radio frame group is L, the radio frame number of radio frames included in radio frame group i is [iL, iL + 1, iL + 2,..., iL + L - 1}, where i = 0, 1, 2... (1024/L) - 1, and when the number of radio frames included in each radio frame group is made different according to different adjustment granularities, $L \in \{8, 16, 32...\}$.

Step 102: sending a synchronization signal in each radio frame in a radio frame group according to a sending timing relationship of the synchronization signal in the radio frame.

In an embodiment, in the related art, synchronization signals in all radio frames are simultaneously sent via a first antenna port and a second antenna port, which means that the terminal may receive two identical synchronization signals. As the two signals have different propagation paths in the space, if the terminal is exactly located at a position where the difference between two signal propagation paths is $\frac{\lambda}{2} + n*\lambda$, the phase difference between the two signals is 180°, where A is the wavelength of the electromagnetic wave of the signal. In this case, at the terminal antenna, energy of the two signals is canceled, greatly reducing a signal-to-noise ratio of the radio signal received by the terminal. At the same time, 3GPP has specified that NB-IoT uses a primary synchronization signal NPSS and a secondary synchronization signal NSSS. As NPSS is generated on the basis of a ZC sequence with a sequence length of 11, the sequence length is short, causing the autocorrelation of NPSS to be reduced when the signal-to-noise ratio is relatively low, thereby greatly reducing the success rate of NPSS demodulation by the terminal.

Therefore, in the present embodiment, synchronization signal sending timing relationships in the radio frames of the radio frame groups at the first antenna port and the second antenna port are used to instruct the first antenna port and the second antenna port to send respective radio frame groups. Synchronization signal sending timing relationships in radio frames of radio frame groups at the first antenna port and the second antenna port are set to indicate whether a synchronization signal in each radio frame in the radio frame group is sent via the first antenna port or the second antenna port, so that synchronization signals in some radio frames in each radio frame group are sent only via the first antenna port or the second antenna port. As each radio frame contains sequences of NPSS and NSSS, a terminal located at a position where the difference between two signal propagation paths is $\frac{\lambda}{2} + n*\lambda$ can also receive at least one radio frame including a synchronization signal in a sending period of the radio frame group, thereby demodulating NPSS and NSSS.

In an example, before sending radio frames, first, according to the number of frames of the radio frame group, a first timing bitmap for the first antenna port to send the synchronization signal in each radio frame in the radio frame group is generated, and a second timing bitmap for the second antenna port to send the synchronization signal in each radio frame in the radio frame group is generated. The number of bits of the timing bitmap is equal to the number of frames of the radio frame group. Then, the first antenna port determines a synchronization signal sending timing relationship in the radio frame according to the first timing bitmap, and the second antenna port determines a synchronization signal sending timing relationship in the radio frame according to the second timing bitmap, and the first antenna port and the second antenna port respectively send radio frames.

In an embodiment, the radio frame sending timing relationships of the first antenna port and the second antenna port are designed in timing bitmaps, that is, when the first antenna port and the second antenna port send a radio frame group, the sending operation of the synchronization signal in the radio frame is executed on the basis of the timing bitmaps. The timing bitmap is a digital sequence composed of 0 or 1, and each digit corresponds to a sending operation for a synchronization signal in a radio frame. If the value of the timing bitmap at the current moment is 0, it indicates that no sending operation of the synchronization signal in the radio frame is executed; and if the value of the timing bitmap at the current moment is 1, it indicates that the sending operation of the synchronization signal in the radio frame is executed.

In an example, the synchronization signal sending method in the present embodiment is implemented by means of a synchronization signal sending apparatus. As shown in Fig. 2, the synchronization signal sending apparatus comprises: a grouping module 201, a calculation module 202, and an execution module 203.

The grouping module 201 is configured to group radio frames on the basis of a preset number of frames according to different adjustment granularities, wherein the length of each group of radio frames is a period for adjustment of the radio frame group.

The calculation module 202 is configured to calculate a sending situation of a synchronization signal in the radio frame in each radio frame group, and to generate a first timing bitmap and a second timing bitmap for the first antenna port and the second antenna port to send the synchronization signal in the radio frame.

The execution module 203 is configured to determine radio frame sending timings of the first antenna port and the second antenna port according to the timing bitmaps, and to execute an action of sending the synchronization signal in the radio frame.

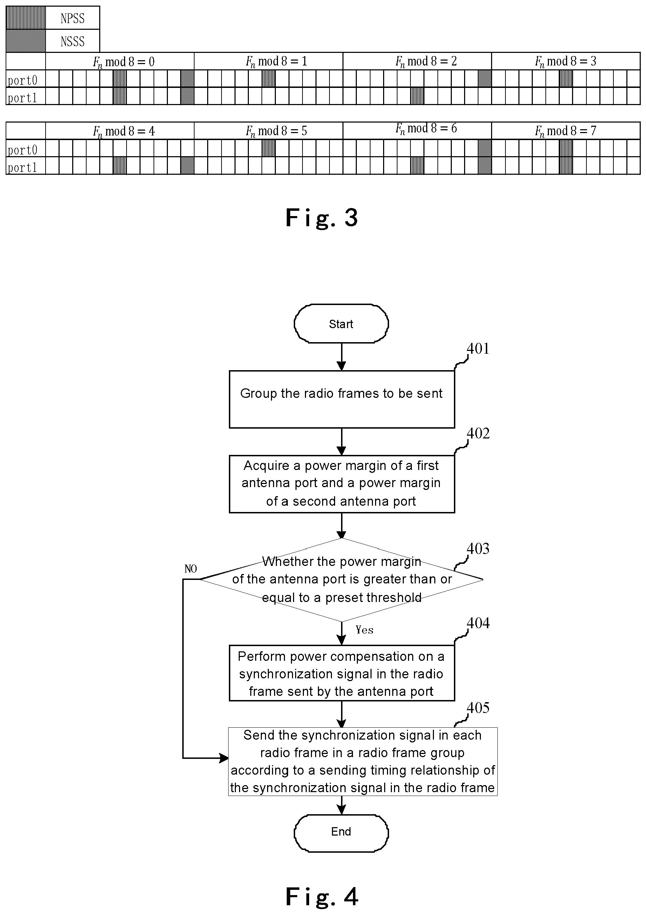

In a particular implementation, it is assumed that the number of frames of the current radio frame group is 8, the first antenna port and the second antenna port will perform sending with 8 radio frames as a period, respectively. Fig. 3 shows sending timing relationships of synchronization signals in radio frames at a first antenna port and a second antenna port, where port0 represents the first antenna port, and port1 represents the second antenna port. In a radio frame group, the radio frame of a primary synchronization signal NPSS sent by the first antenna port is $F_N$mode8 $\in$ {0,1,3,5,7}, the radio frame of a secondary synchronization signal NSSS sent by the first antenna port is $F_N$mode8 $\in$ {0,2,6}, the radio frame of a primary synchronization signal NPSS sent by the second antenna port is $F_N$mode8 $\in$ {0,2,4,6,7}, and the radio frame of a secondary synchronization signal NSSS sent by the second antenna port is $F_N$mode8 $\in$ {0,4,6}. The timing bitmap instructing the first antenna port to send a primary synchronization signal NPSS is [11010101], and the timing bitmap instructing the first antenna port to send a secondary synchronization signal NSSS is [10100010]; and the timing bitmap instructing the second antenna to send a primary synchronization signal NPSS is [10101011], and the timing bitmap instructing the second antenna to send a secondary synchronization signal NSSS is [10001010]. The first antenna port and the second antenna port send primary and secondary synchronization signals according to the timing bitmaps respectively.

It should be noted that, the foregoing examples in the present embodiment are all examples for easy understanding, and do not limit the technical solutions of the present invention.

Compared with the prior art, in the present embodiment, radio frames to be sent are grouped, so as to obtain a plurality of radio frame groups, and each radio frame group is sent via a first antenna port and a second antenna port, wherein there is at least one radio frame, in each radio frame group, having a synchronization signal sent only via the first antenna port or the second antenna port, so that a terminal only receives the synchronization signal from one antenna port periodically, thereby reducing the probability that the terminal cannot complete synchronization with a base station caused by demodulation failure because two signals received by the terminal has a phase difference of 180 degrees and the signals are canceled.

A second embodiment of the present invention relates to a synchronization signal sending method. The second embodiment is substantially the same as the first embodiment, and the main differences lie in that: in the second embodiment of the present invention, before sending each radio frame group via a first antenna port and a second antenna port, the method further comprises: acquiring a power margin of the first antenna port and a power margin of the second antenna port, wherein, the power margin of the first antenna port is the difference between a maximum power capability and a configured power of the first antenna port, and the power margin of the second antenna port is the difference between a maximum power capability and a configured power of the second antenna port; and determining, according to the power margin of the first antenna port, whether to perform power compensation on the synchronization signal in the radio frame sent by the first antenna port, and determining, according to the power margin of the second antenna port, whether to perform power compensation on the synchronization signal in the radio frame sent by the second antenna port.

The second embodiment of the present invention will be specifically described below with reference to the drawings. Fig. 4 shows a synchronization signal sending method in the present embodiment, comprising: step 401: grouping radio frames to be sent.

This step is similar to step 101 in the first embodiment of the present invention, and related implementation details have been specifically described in the first embodiment of the present invention, which are not described herein again.

Step 402: acquiring a power margin of a first antenna port and a power margin of a second antenna port.

In an embodiment, the power margin of an antenna port is the difference between a maximum power capability and a configured power of the antenna port. The maximum power capability refers to the maximum power that a base station device can provide for an antenna port; and the configured power refers to the current actual transmit power of the antenna port. In the actual deployment process of a base station, an actual transmit power of an antenna port is likely to attenuate, and therefore when the antenna port sends a radio frame, the configured power of a first antenna port and a second antenna port needs to be acquired in real time, and meanwhile the power margin of the first antenna port and the power margin of the second antenna port need to be calculated and acquired.

Step 403, determining whether the power margin of the antenna port is greater than or equal to a preset threshold. If the power margin of the antenna port is greater than or equal to a preset threshold, step 404 is executed to perform power compensation on a synchronization signal in the radio frame sent by the antenna port; and if the power margin of the antenna port is less than a preset threshold, step 405 is executed to send the synchronization signal in each radio frame in a radio frame group according to a sending timing relationship of the synchronization signal in the radio frame.

In an embodiment, in this step, the relationships between the maximum power capability and the configured power of the first antenna port and the second antenna port of the base station are calculated to obtain power margins of the first antenna port and the second antenna port.

Step 404, performing power compensation on a synchronization signal in the radio frame sent by the antenna port.

In an embodiment, if the power margin of the first antenna port is greater than or equal to the preset threshold, power compensation is performed on the synchronization signal in the radio frame sent by the first antenna port; and if the power margin of the second antenna port is greater than or equal to the preset threshold, power compensation is performed on the synchronization signal in the radio frame sent by the second antenna port.

Step 405: sending the synchronization signal in each radio frame in a radio frame group according to a sending timing relationship of the synchronization signal in the radio frame.

In an embodiment, after detecting the maximum power capability and the configured power of each antenna port, the base station calculates a power margin of each antenna port, and then determines, according to the power margin of each antenna port, whether to perform power compensation on the synchronization signal in the radio frame sent by the antenna port. In the present embodiment, the preset condition is that a power margin of an antenna port is greater than or equal to a preset threshold, and when the power margin satisfies the preset condition, it is determined to perform power compensation on a synchronization signal in a radio frame sent by the antenna port. In order to ensure that a radio frame received by a terminal has a certain signal strength, when the configured power of an antenna port is relatively low, that is, when the difference between the maximum power capability and the configured power of the antenna port is greater than or equal to a preset threshold, power compensation needs to be performed on a synchronization signal in the radio frame sent by the port.

Further, P1 and P2 are taken to represent the maximum power capability of the first antenna port and the maximum power capability of the second antenna port respectively, and P1 and P2 are taken to represent the configured power of the first antenna port and the configured power of the second antenna port respectively. The preset threshold is taken as a = 3dB. When the condition $P1 - P1 \geq a$ and $P0 - P0 \geq a$ is satisfied, a power compensation identifier 11 is generated; when the condition $P1 - P1 \geq a$ and $P0 - P0 < a$ is satisfied, a power compensation identifier 10 is generated; when the condition $P1 - P1 < a$ and $P0 - P0 \geq a$ is satisfied, a power compensation identifier 01 is generated; and when the condition $P1 - P1 < a$ and $P0 - P0 < a$ is satisfied, a power compensation identifier 00 is generated. The power compensation identifier comprises two digits, the first digit representing the power compensation status of the first antenna port, and the second digit representing the power compensation status of the second antenna port. 1 indicates that a power margin of a corresponding antenna port reaches a preset threshold, and power compensation needs to be performed on a synchronization signal in a transmitted radio frame; and 0 indicates that the power margin of the corresponding antenna port reaches the preset threshold, and no power compensation needs to be performed on the synchronization signal in the transmitted radio frame. The power compensation value is usually 3dB, that is, the power of the synchronization signal in the radio frame is increased to twice the original power.

In another example, as synchronization signals in all radio frames are sent simultaneously by two antenna ports in the prior art, a radio frame received by a terminal is usually a superposition of two signals, and therefore has a good signal strength. In the embodiments of the present invention, as the synchronization signals in some radio frames are sent only via the first antenna port or the second antenna port, the problem of signal cancellation is avoided. However, as the power of a single antenna port may be low, if the synchronization signals in the currently sent radio frame are sent only via the first antenna port or the antenna port, power compensation is performed on the synchronization signals in the currently sent radio frame. For a radio frame sent by a single antenna, in order to enable the terminal to obtain a signal strength similar to that of the radio frame sent by two antennas, the power compensation value is also 3dB, such that the power of the radio frame is increased to twice the original power. It should be noted that the sending power of an antenna port cannot be greater than the maximum power capability of the antenna port no matter what kind of boost is made to the power of the radio frame.

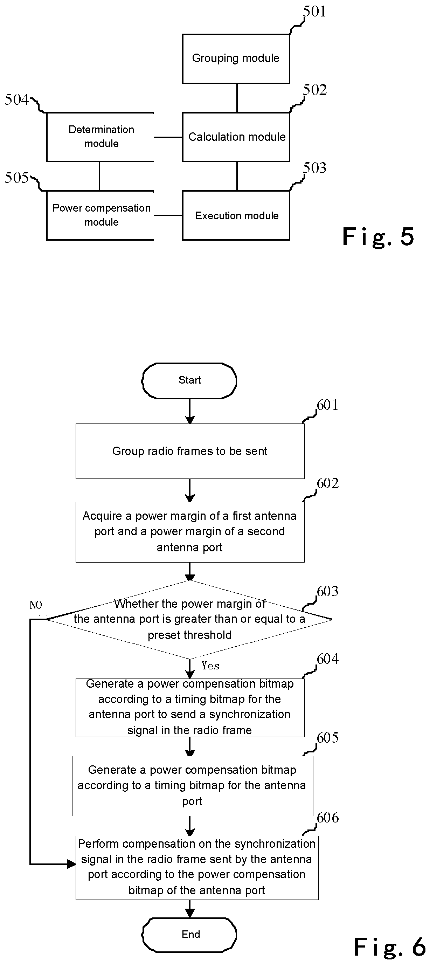

In an example, the synchronization signal sending method of the present embodiment is implemented by means of a radio frame sending apparatus. As shown in Fig. 5, the radio frame sending apparatus comprises: a grouping module 501, a calculation module 502, an execution module 503, a determination module 504 and a power compensation module 505.

The grouping module 501, the calculation module 502 and the execution module 503 are similar to the grouping module 201, the calculation module 202 and the execution module 203 in the first embodiment of the present invention. Functions related to the virtual modules have been specifically described in the first embodiment of the present invention, which are not described herein again.

The determination module 504 is configured to detect the maximum power capability and the configured power of a first antenna port and a second antenna port, to respectively determine relationships between the maximum power capability and the configured power of the first antenna port and the second antenna port, and to generate corresponding power compensation identifiers for the antenna ports.

The power compensation module 505 is configured to, within a sending period of each radio frame group, perform power compensation on a synchronization signal in a radio frame sent by each antenna port according to the power compensation identifier and the sending timing relationship of the synchronization signal in each radio frame.

Compared with the prior art, before sending a radio frame, a power margin of an antenna port is also detected, and if the power margin is greater than or equal to a preset threshold, power compensation is performed on the radio frame sent by the antenna port. While significantly reducing the probability that the terminal cannot complete synchronization with a base station caused by demodulation failure because two signals received by the terminal has a phase difference of 180 degrees and the signals are canceled, the signal strength of the signals received by the terminal can also be ensured, the signal-to-noise ratio of the synchronization signals can be improved, and the stability of the terminal for demodulating the synchronization signals can be ensured.

The division of the steps of the method is only for describing clearly. During implementation, these may be combined into one step or some steps may be divided into a plurality of steps, all of which are within the scope of protection of the present patent as long as they include the same logical relationship; and insignificant modifications added or insignificant designs introduced into an algorithm or a flow but not changing the core designs of the algorithm and the flow are all within the scope of protection of the present patent.

A third embodiment of the present invention relates to a synchronization signal sending method. The present embodiment is similar to the second embodiment of the present invention, and the differences lie in that: in the present embodiment, performing power compensation on the synchronization signal in the radio frame sent by the first antenna port comprises: according to the timing bitmap of the first antenna port, generating a power compensation bitmap of the first antenna port, and according to the power compensation bitmap of the first antenna port, performing power compensation on the radio frame sent by the first antenna port; and performing power compensation on the radio frame sent by the second antenna port comprises: according to the timing bitmap of the second antenna port, generating a power compensation bitmap of the second antenna port, and according to the power compensation bitmap of the second antenna port, performing power compensation on the radio frame sent by the second antenna port.

The third embodiment of the present invention will be specifically described below with reference to the drawings. Fig. 6 shows a radio frame sending method in the present embodiment, comprising:
Step 601: grouping radio frames to be sent.

Step 602: acquiring a power margin of a first antenna port and a power margin of a second antenna port.

Step 603, determining whether the power margin of the antenna port satisfies a preset condition. If the power margin of the antenna port satisfies a preset condition, step 604 is executed to generate a power compensation bitmap according to a timing bitmap for the antenna port to send a synchronization signal in the radio frame; and if the power margin of the antenna port does not satisfy the preset condition, step 606 is executed to send the synchronization signal in each radio frame in a radio frame group according to a synchronization signal sending timing relationship in the radio frame of the radio frame group.

Step 601 to step 603 are similar to step 401 to step 403 in the second embodiment of the present invention, and related implementation details are specifically described in the second embodiment of the present invention, which are not described herein again.

Step 604, generating a power compensation bitmap according to a timing bitmap for the antenna port to send a synchronization signal in the radio frame.

Step 605, performing compensation on the synchronization signal in the radio frame sent by the antenna port according to the power compensation bitmap of the antenna port.

Optionally, in the present implementation, first, a power compensation bitmap of the first antenna port and a power compensation bitmap of the second antenna port are generated according to timing bitmaps for the first antenna port and the second antenna port to send synchronization signals in radio frames, and the power compensation bitmap is used to control a power compensation action of the antenna port. Similar to a timing bitmap for controlling an antenna port to send a synchronization signal in a radio frame, a power compensation bitmap is also a digital sequence composed of 0 or 1, the number of bits of the digital sequence is the same as the number of frames of a radio frame group, and each digit corresponds to a power compensation action for a synchronization signal in a radio frame. If the value of the power compensation bitmap at the current moment is 0, it indicates that no power compensation is performed on the synchronization signal in the currently sent radio frame; and if the value of the power compensation bitmap at the current moment is 1, it indicates that power compensation is performed on the currently sent radio frame.

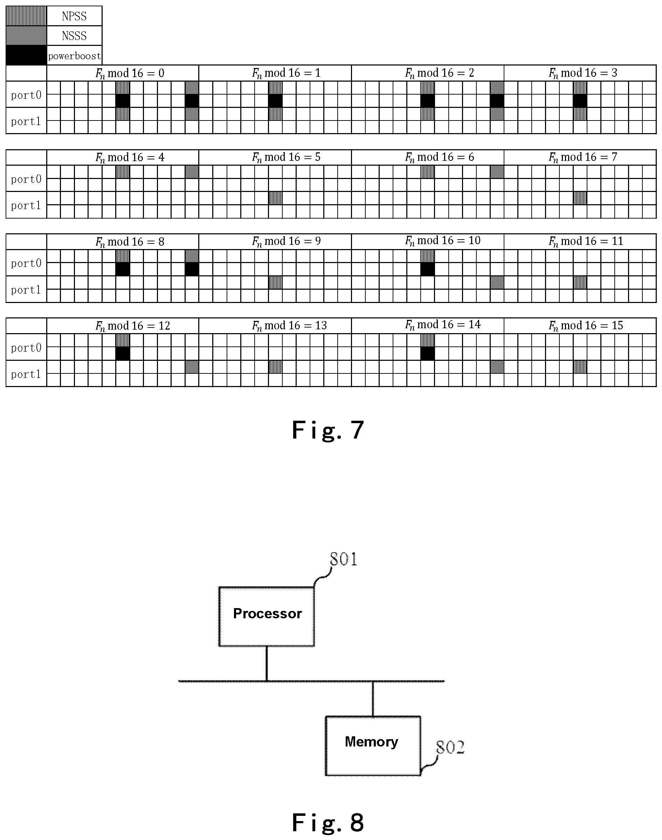

In a particular implementation, it is assumed that the number of frames of the current radio frame group is 16, the first antenna port and the second antenna port will perform sending with 16 radio frames as a period, respectively. Fig. 7 shows sending timing relationships and power compensation relationships of synchronization signals in radio frames at a first antenna port and a second antenna port, where port0 represents the first antenna port, and port1 represents the second antenna port. In a radio frame group, the radio frame of a primary synchronization signal NPSS sent by the first antenna port is $F_N$mod8 $\in$ {0,1,2,3,4,6,8,10,12,14}, the radio frame of a secondary synchronization signal NSSS sent by the first antenna port is $F_N$mod8 $\in$ {0,2,4,6,8}, the radio frame of a primary synchronization signal NPSS sent by the second antenna port is $F_N$mod8 E {0,1,2,3,5,7,9,11,13,15}, and the radio frame of a secondary synchronization signal NSSS sent by the second antenna port is $F_N$mod8 $\in$ {0,2,10,12,14}. The timing bitmap instructing the first antenna port to send a primary synchronization signal NPSS is [1111101010101010], and the timing bitmap instructing the first antenna port to send a secondary synchronization signal NSSS is [1010101010000000]; and the timing bitmap instructing the second antenna to send a primary synchronization signal NPSS is [1111010101010101], and the timing bitmap instructing the second antenna to send a secondary synchronization signal NSSS is [1010000000101010]. The first antenna port and the second antenna port send the timing bitmaps including primary and secondary synchronization signals according to the timing bitmaps respectively.

Thereafter, power margins of the first antenna port and the second antenna port are calculated and acquired, it is determined that currently power compensation needs to be performed on a synchronization signal in a radio frame sent by the first antenna port, and no power compensation needs to be performed on the radio frame sent by the second antenna port, and a power compensation identifier 10 is generated. At the first antenna port, the radio frame of the primary synchronization signal NPSS on which power compensation needs to be performed is calculated as $F_N$mod8 E {0,1,2,3,4,6,8,10,12,14}, and the radio frame of the secondary synchronization signal NSSS on which power compensation needs to be performed is calculated as $F_N$mod8 $\in$ {0,2,4,6,8}. No power compensation is performed on the radio frame of primary/secondary synchronization signal NPSS/NSSS sent by the second antenna port. A power compensation bitmap [1111101010101010] for the primary synchronization signal NPSS sent by the first antenna port, and a power compensation bitmap [1010101010000000] for the secondary synchronization signal sent by the first antenna port are obtained.

A fourth embodiment of the present invention relates to an electronic device. As shown in Fig. 8, the electronic device comprises at least one processor 801 and a memory 802 in communication connection with the at least one processor 801, wherein the memory 802 stores an instruction executable by the at least one processor 801, and the instruction is executed by the at least one processor 801, so that the at least one processor 801 can execute the synchronization signal sending method in the first to third embodiments.

The memory 802 and the processor 801 are connected in a bus manner, the bus may include any number of interconnected buses and bridges, and the bus connects various circuits of the one or more processors 801 and the memory 802 together. The bus may also connect a variety of other circuits together, such as peripheral device, voltage stabilizer, and power management circuit, which are all well known in the art and therefore are not described further herein. The bus interface provides an interface between a bus and a transceiver. A transceiver may refer to one element or multiple elements, such as multiple receivers and transmitters, which provide a unit for communicating with various other devices over a transmission medium. Data processed by the processor 801 is transmitted on a radio medium via an antenna. Optionally, the antenna further receives data and transmits the data to the processor 801.

The processor 801 is responsible for bus management and general processing, and may further provide various functions, including timing, peripheral interface, voltage regulation, power supply management, and other control functions. And the memory 802 may be used to store data used by the processor 801 when executing an operation.

A fifth embodiment of the present invention relates to a computer-readable storage medium, storing a computer program. The computer program implements the foregoing method embodiments when executed by a processor.

That is, a person skilled in the art may understand that all or some of the steps of the method in the foregoing embodiments may be implemented by a program instructing relevant hardware. The program is stored in a storage medium and includes several instructions for causing a device (which may be a single chip, a chip, etc.) or a processor to execute all or some of the steps of the method in the embodiments of the present invention. The foregoing storage medium includes: any medium that can store program codes, such as a USB flash disk, a mobile hard disk, a read-only memory (ROM), a random access memory (RAM), a magnetic disk, or an optical disk.

A person of ordinary skill in the art may understand that the foregoing embodiments are specific embodiments for implementing the present invention, and in practical applications, various changes may be made in form and details without departing from the scope of the present invention.

## Claims

1.  A synchronization signal sending method, comprising:

    grouping radio frames to be sent, so as to obtain a plurality of radio frame groups; and
    sending each radio frame group via a first antenna port and a second antenna port, wherein a synchronization signal in at least one radio frame in each radio frame group is sent only via the first antenna port or the second antenna port.

2.  The synchronization signal sending method according to claim 1, wherein sending each radio frame group via a first antenna port and a second antenna port comprises:

    determining a first synchronization signal sending timing relationship of the radio frame group at the first antenna port and a second synchronization signal sending timing relationship of the radio frame group at the second antenna port, wherein the first synchronization signal sending timing relationship is used for indicating whether the synchronization signal in each radio frame in the radio frame group is sent via the first antenna port, and the second synchronization signal sending timing relationship is used for indicating whether the synchronization signal in each radio frame in the radio frame group is sent via the second antenna port; and
    according to the first synchronization signal sending timing relationship and the second synchronization signal sending timing relationship, sending the synchronization signal in each radio frame in the radio frame group via the first antenna port and the second antenna port.

3.  The synchronization signal sending method according to claim 2, wherein the synchronization signal sending timing relationship in the radio frame is acquired by:

    according to the number of frames of the radio frame group, generating a first timing bitmap for the first antenna port to send the synchronization signal in each radio frame in the radio frame group, and according to the number of frames of the radio frame group, generating a second timing bitmap for the second antenna port to send the synchronization signal in each radio frame in the radio frame group; and
    according to the first timing bitmap, determining a synchronization signal sending timing relationship in the radio frame of the radio frame group at the first antenna port, and according to the second timing bitmap, determining a synchronization signal sending timing relationship in the radio frame of the radio frame group at the second antenna port.

4.  The synchronization signal sending method according to claim 1, wherein before sending each radio frame group via a first antenna port and a second antenna port, the method further comprises:

    acquiring a power margin of the first antenna port and a power margin of the second antenna port, wherein the power margin of the first antenna port is the difference between a maximum power capability and a configured power of the first antenna port, and the power margin of the second antenna port is the difference between a maximum power capability and a configured power of the second antenna port;
    determining, according to the power margin of the first antenna port, whether to perform power compensation on the synchronization signal in the radio frame sent by the first antenna port; and determining, according to the power margin of the second antenna port, whether to perform power compensation on the synchronization signal in the radio frame sent by the second antenna port.

5.  The synchronization signal sending method according to claim 4, wherein,
    determining, according to the power margin of the first antenna port, whether to perform power compensation on the synchronization signal in the radio frame sent by the first antenna port comprises:

when the power margin of the first antenna port is greater than or equal to a preset threshold, determining to perform power compensation on the synchronization signal in the radio frame sent by the first antenna port; and determining, according to the power margin of the second antenna port, whether to perform power compensation on the synchronization signal in the radio frame sent by the second antenna port comprises:
when the power margin of the second antenna port is greater than or equal to the preset threshold, determining to perform power compensation on the synchronization signal in the radio frame sent by the second antenna port.

6. The synchronization signal sending method according to claim 5, wherein,
performing power compensation on the synchronization signal in the radio frame sent by the first antenna port comprises:

according to the timing bitmap of the first antenna port, generating a power compensation bitmap of the first antenna port; and
according to the power compensation bitmap of the first antenna port, performing power compensation on the synchronization signal in the radio frame sent by the first antenna port; and
performing power compensation on the synchronization signal in the radio frame sent by the second antenna port comprises:

according to the timing bitmap of the second antenna port, generating a power compensation bitmap of the second antenna port; and
according to the power compensation bitmap of the second antenna port, performing power compensation on the synchronization signal in the radio frame sent by the second antenna port.

7. The synchronization signal sending method according to claim 1, wherein before sending each radio frame group via a first antenna port and a second antenna port, the method further comprises: In a case that the synchronization signal in the radio frame to be sent is sent only via the first antenna port or the second antenna port, performing power compensation on the synchronization signal in the radio frame to be sent.

8. The synchronization signal sending method according to any one of claims 1 to 7, wherein grouping radio frames to be sent comprises:

grouping the radio frames to be sent on the basis of a preset number of frames;
wherein the value of the preset number of frames is 2 to the power of N, and N is a natural number greater than or equal to 3.

9. An electronic device, comprising:

at least one processor; and,
a memory in communication connection with the at least one processor; wherein,
the memory stores an instruction executable by the at least one processor, and the instruction is executed by the at least one processor, so that the at least one processor can execute the synchronization signal sending method according to any one of claims 1 to 8.

10. A computer-readable storage medium, storing a computer program which, when executed by a processor, implements the synchronization signal sending method according to any one of claims 1 to 8.

Start

101

Group the radio frames to be sent

102

Send a synchronization signal in each radio
frame in a radio frame group according to a
sending timing relationship of the synchronization
signal in the radio frame

End

Fig. 1

201

Grouping module

202

Calculation module

203

Execution module

Fig. 2

| | NPSS |
| :-: | :-- |
| | NSSS |

| | $F_n \bmod 8 = 0$ | | | | $F_n \bmod 8 = 1$ | | | | $F_n \bmod 8 = 2$ | | | | $F_n \bmod 8 = 3$ | | | |
| :-- | :-- | :-- | :-- | :-- | :-- | :-- | :-- | :-- | :-- | :-- | :-- | :-- | :-- | :-- | :-- | :-- |
| port0 | | | | | | | | | | | | | | | | |
| port1 | | | | | | | | | | | | | | | | |

| | $F_n \bmod 8 = 4$ | | | | $F_n \bmod 8 = 5$ | | | | $F_n \bmod 8 = 6$ | | | | $F_n \bmod 8 = 7$ | | | |
| :-- | :-- | :-- | :-- | :-- | :-- | :-- | :-- | :-- | :-- | :-- | :-- | :-- | :-- | :-- | :-- | :-- |
| port0 | | | | | | | | | | | | | | | | |
| port1 | | | | | | | | | | | | | | | | |

**Fig. 3**

Start

401 Group the radio frames to be sent

402 Acquire a power margin of a first antenna port and a power margin of a second antenna port

403 Whether the power margin of the antenna port is greater than or equal to a preset threshold

NO

Yes

404 Perform power compensation on a synchronization signal in the radio frame sent by the antenna port

405 Send the synchronization signal in each radio frame in a radio frame group according to a sending timing relationship of the synchronization signal in the radio frame

End

**Fig. 4**

Fig. 5

Fig. 6

| | NPSS |
|---|---|
| | NSSS |
| | powerboost |

| | $F_n \bmod 16 = 0$ | $F_n \bmod 16 = 1$ | $F_n \bmod 16 = 2$ | $F_n \bmod 16 = 3$ |
|---|---|---|---|---|
| port0 | | | | |
| port1 | | | | |

| | $F_n \bmod 16 = 4$ | $F_n \bmod 16 = 5$ | $F_n \bmod 16 = 6$ | $F_n \bmod 16 = 7$ |
|---|---|---|---|---|
| port0 | | | | |
| port1 | | | | |

| | $F_n \bmod 16 = 8$ | $F_n \bmod 16 = 9$ | $F_n \bmod 16 = 10$ | $F_n \bmod 16 = 11$ |
|---|---|---|---|---|
| port0 | | | | |
| port1 | | | | |

| | $F_n \bmod 16 = 12$ | $F_n \bmod 16 = 13$ | $F_n \bmod 16 = 14$ | $F_n \bmod 16 = 15$ |
|---|---|---|---|---|
| port0 | | | | |
| port1 | | | | |

Fig. 7

801

Processor

Memory 802

Fig. 8

## INTERNATIONAL SEARCH REPORT

| | International application No. |
|---|---|
| | **PCT/CN2020/139938** |

| A. | CLASSIFICATION OF SUBJECT MATTER |
|---|---|
| | H04W 56/00(2009.01)i |

According to International Patent Classification (IPC) or to both national classification and IPC

| B. | FIELDS SEARCHED |
|---|---|

Minimum documentation searched (classification system followed by classification symbols)
    H04W; H04L

Documentation searched other than minimum documentation to the extent that such documents are included in the fields searched

Electronic data base consulted during the international search (name of data base and, where practicable, search terms used)
    CNPAT, WPI, EPODOC, CNKI, 3GPP: 同步, 天线, 端口, 两个, 第一, 第二, 时序, 位图, 功率, 裕量, 补偿, 窄带, 物联网, 主同步, 辅同步, 相位, 叠加, 相关, NB-IoT, NPSS, NSSS, NB-PSS, NB-SSS, PSS, SSS, synchronization, antenna, port, bitmap, power, narrowband, two, first, second, compansat+, phase, overlap, correlation

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2018131375 A1 (NTT DOCOMO, INC.) 19 July 2018 (2018-07-19) description, paragraphs [0002]-[0017] and figures 1-7 | 1, 7-10 |
| Y | CN 110352571 A (LG ELECTRONICS INC.) 18 October 2019 (2019-10-18) description, paragraphs [0258]-[0259] | 1, 7-10 |
| A | CN 109275184 A (ZTE CORPORATION) 25 January 2019 (2019-01-25) entire document | 1-10 |
| A | CN 107743059 A (CHONGQING UNIVERSITY OF POSTS AND TELECOMMUNICATIONS) 27 February 2018 (2018-02-27) entire document | 1-10 |
| A | QUALCOMM INC. "NB-PSS and NB-SSS Design" *R1-161116, 3GPP TSG RAN WG1 Meeting #84*, 19 February 2016 (2016-02-19), entire document | 1-10 |
| A | HUAWEI. "Introduction of Rel-14 NB-IoT Enhancements" *R2-1702192, 3GPP TSG-97 Meeting #97*, 17 February 2017 (2017-02-17), entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 March 2021** | **31 March 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/139938** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | US 9929842 B2 (BEIJING SPREADTRUM HI-TECH COMMUNICATIONS TECHNOLOGY CO.,LTD.) 27 March 2018 (2018-03-27) entire document | | 1-10 |

Form PCT/ISA/210 (second sheet) (January 2015)

**INTERNATIONAL SEARCH REPORT**
Information on patent family members

International application No.

**PCT/CN2020/139938**

| Patent document cited in search report | | | Publication date (day/month/year) | Patent family member(s) | | | Publication date (day/month/year) |
|---|---|---|---|---|---|---|---|
| WO | 2018131375 | A1 | 19 July 2018 | JP | WO2018131375 | A1 | 07 November 2019 |
| | | | | US | 2020067753 | A1 | 27 February 2020 |
| CN | 110352571 | A | 18 October 2019 | RU | 2719354 | C1 | 17 April 2020 |
| | | | | WO | 2018164414 | A1 | 13 September 2018 |
| | | | | BR | 112019008950 | A2 | 09 July 2019 |
| | | | | AU | 2018232645 | A1 | 07 February 2019 |
| | | | | EP | 3583711 | A1 | 25 December 2019 |
| | | | | PH | 12019500623 | A1 | 11 November 2019 |
| | | | | MX | 2019001630 | A | 05 August 2019 |
| | | | | KR | 20180111980 | A | 11 October 2018 |
| | | | | JP | 2020504991 | A | 13 February 2020 |
| | | | | CA | 3031674 | A1 | 13 September 2018 |
| | | | | CL | 2019000134 | A1 | 22 April 2019 |
| | | | | SG | CN 11201900436 U | A | 27 February 2019 |
| CN | 109275184 | A | 25 January 2019 | WO | 2019015538 | A1 | 24 January 2019 |
| CN | 107743059 | A | 27 February 2018 | | None | | |
| US | 9929842 | B2 | | CN | 106961689 | A | 18 July 2017 |
| | | | | US | 2017201361 | A1 | 13 July 2017 |

Form PCT/ISA/210 (patent family annex) (January 2015)